# EUROPEAN PATENT APPLICATION

(11) **EP 3 136 699 A1**
(43) Date of publication of application: **01.03.2017**
(21) Application number: 16175352.0
(22) Date of filing: 20.06.2016
(51) Int. Cl.: H04M 1/725, G06F 3/02

(54) **METHOD AND DEVICE FOR CONNECTING EXTERNAL EQUIPMENT**

(30) Priority: 28.08.2015 CN 201510544228
(71) Applicant: Xiaomi Inc., Beijing 100085 (CN)
(72) Inventor: WANG, Zhengan, 100085 Beijing (CN); YAN, Laijun, 100085 Beijing (CN); WU, Junzhou, 100085 Beijing (CN)
(74) Representative: Sackin, Robert

(57) **Abstract**

The present disclosure relates to a method and a device for connecting external equipment, wherein the method includes: when it is monitored that the external equipment is connected, acquiring (S101) description information of the external equipment; determining (S102) an external keyboard equipment type of the external equipment according to the description information of the external equipment; and accomplishing (S103) an equipment statement of and a connection to the external equipment according to the external keyboard equipment type. Thereby, when the equipment such as a smart terminal connects with the external equipment, if a user needs to perform input operation, it may be determined whether to perform the input operation with a soft keyboard of an input method or perform the input operation through the external equipment according to the external keyboard equipment type, thus ensuring that the user may normally perform the input operation and improving the user experience.

## Description

### TECHNICAL FIELD

The present disclosure generally relates to the field of equipment connection technology, and more particularly, to a method and a device for connecting external equipment.

### BACKGROUND

In the situation where photographing function of a terminal is more and more mature, almost everyone in the world can take photos with the terminal. There are more and more self-shooting situations, and in order to facilitate self-shooting, the Bluetooth (registered trade mark) selfie stick emerges at the right moment. A selfie stick is a stick or pole to which a terminal such as a smart phone is connected to take a selfie photograph. A selfie is a self portrait photograph. Bluetooth is a wireless technology standard for exchanging data over short distances. A Bluetooth selfie stick typically includes a button that when pressed uses a Bluetooth connection to the connected terminal to trigger the terminal to take a photograph.

Thus, after the terminal connects with the Bluetooth selfie stick via Bluetooth, the user may take photos by triggering an electronic shutter on the Bluetooth selfie stick.

### SUMMARY

The embodiments of the present disclosure provide a method and a device for connecting external equipment, including the following technical solutions.

According to a first aspect of embodiments of the present disclosure, there is provided a method for connecting external equipment, applied in a smart terminal, including:
when it is monitored that the external equipment is connected, acquiring description information of the external equipment;
determining an external keyboard equipment type of the external equipment according to the description information of the external equipment; and
accomplishing an equipment statement of and a connection to the external equipment according to the external keyboard equipment type.

In one embodiment, the description information of the external equipment is set according to a keyboard use way of the external equipment.

In one embodiment, the acquiring description information of the external equipment includes:
acquiring keyboard service finding protocol recording information of the external equipment, wherein the keyboard service finding protocol recording information is used for stating a key supported by the external equipment; and
the determining an external keyboard equipment type of the external equipment according to the description information of the external equipment includes:
judging whether the external equipment supports a preset letter key according to the keyboard service finding protocol recording information;
when the external equipment supports the preset letter key, determining that the external keyboard equipment type of the external equipment is a qwerty keyboard type; and
when the external equipment does not support the preset letter key, determining that the external keyboard equipment type of the external equipment is a numeric keyboard type, wherein the numeric keyboard type allows a smart terminal to pop up a soft keyboard of an input method during input.

In one embodiment, the acquiring description information of the external equipment includes:
acquiring manufacture identification information of the external equipment; and
the determining an external keyboard equipment type of the external equipment according to the description information of the external equipment includes:
searching the external keyboard equipment type corresponding to the manufacture identification information of the external equipment in a preset corresponding relationship between the manufacture identification information and the external keyboard equipment type;
when the searched external keyboard equipment type is a numeric keyboard type, determining that the external keyboard equipment type of the external equipment is a numeric keyboard type; and
when the searched external keyboard equipment type is a qwerty keyboard type, determining that the external keyboard equipment type of the external equipment is a qwerty keyboard type.

In one embodiment, the acquiring description information of the external equipment includes:
acquiring an on-off state of external keyboard equipment type identification of the external equipment, wherein the external keyboard equipment type identification is used for identifying the external keyboard equipment type with the on-off state; and
the determining an external keyboard equipment type of the external equipment according to the description information of the external equipment includes:
searching the external keyboard equipment type corresponding to the on-off state of the external keyboard equipment type identification of the external equipment in a preset corresponding relationship between the on-off state of the external keyboard equipment type identification and the external keyboard equipment type;
when the searched external keyboard equipment type is a numeric keyboard type, determining that the external keyboard equipment type of the external equipment is a numeric keyboard type; and
when the searched external keyboard equipment type is a qwerty keyboard type, determining that the external keyboard equipment type of the external equipment is a qwerty keyboard type.

In one embodiment, the accomplishing an equipment statement of and a connection to the external equipment according to the external keyboard equipment type includes:
accomplishing the equipment statement of the external equipment and accomplishing wireless connection with the external equipment according to the external keyboard equipment type.

In one embodiment, the method further includes:
judging the external keyboard equipment type of the external equipment when an input operation is needed;
when the external keyboard equipment type of the external equipment is a numeric keyboard type, popping up a soft keyboard of an input method and performing the input operation with the soft keyboard of the input method; and
when the external keyboard equipment type of the external equipment is a qwerty keyboard type, performing the input operation with a keyboard of the external equipment.

According to a second aspect of embodiments of the present disclosure, there is provided a method for connecting external equipment, applied in an external equipment, including:
when it is monitored that a smart terminal is connected, reporting description information; and
accomplishing connection with the smart terminal according to the description information.

In one embodiment, the method further includes:
before the connection with the smart terminal, setting the description information according to a keyboard use way of the external equipment.

In one embodiment, the setting the description information according to a keyboard use way of the external equipment includes:
setting keyboard service finding protocol recording information according to the keyboard use way of the external equipment, wherein the keyboard service finding protocol recording information is used for stating a key supported by the external equipment;
wherein when the external keyboard equipment type of the external equipment is a qwerty keyboard type, the keyboard service finding protocol recording information states that the external equipment supports a preset letter key; and when the external keyboard equipment type of the external equipment is a numeric keyboard type, the keyboard service finding protocol recording information states that the external equipment does not support the preset letter key.

In one embodiment, the setting the description information according to a keyboard use way of the external equipment includes:
creating a corresponding relationship between manufacture identification information of the external equipment and the external keyboard equipment type of the external equipment according to the keyboard use way of the external equipment;
wherein when the external keyboard equipment type of the external equipment is a qwerty keyboard type, a corresponding relationship between the manufacture identification information and the qwerty keyboard type is created; and when the external keyboard equipment type of the external equipment is a numeric keyboard type, a corresponding relationship between the manufacture identification information and the numeric keyboard type is created.

In one embodiment, the setting the description information according to a keyboard use way of the external equipment includes:
setting an on-off state of external keyboard equipment type identification of the external equipment according to the keyboard use way of the external equipment;
wherein when the external keyboard equipment type of the external equipment is a qwerty keyboard type, the on-off state of the external keyboard equipment type identification of the external equipment is set as a first on-off state; and when the external keyboard equipment type of the external equipment is a numeric keyboard type, the on-off state of the external keyboard equipment type identification of the external equipment is set as a second on-off state.

In one embodiment, the method further includes:
when a keyboard use instruction of the smart terminal is received, starting its own keyboard of the external equipment for the smart terminal to perform input operation.

According to a third aspect of embodiments of the present disclosure, there is provided a device for connecting external equipment, including:
an acquiring module configured to, when it is monitored that the external equipment is connected, acquire description information of the external equipment;
a determining module configured to determine an external keyboard equipment type of the external equipment according to the description information of the external equipment acquired by the acquiring module; and
a connecting module configured to accomplish an equipment statement of and a connection to the external equipment according to the external keyboard equipment type determined by the determining module.

In one embodiment, the description information of the external equipment is set according to a keyboard use way of the external equipment.

In one embodiment, the acquiring module includes:
a first acquiring sub-module configured to acquire keyboard service finding protocol recording information of the external equipment, wherein the keyboard service finding protocol recording information is used for stating a key supported by the external equipment; and
the determining module includes:
a judging sub-module configured to judge whether the external equipment supports a preset letter key according to the keyboard service finding protocol recording information acquired by the first acquiring sub-module;
a first determining sub-module configured to, when the judging sub-module judges that the external equipment supports the preset letter key, determine that the external keyboard equipment type of the external equipment is a qwerty keyboard type; and
a second determining sub-module configured to, when the judging sub-module judges that the external equipment does not support the preset letter key, determine that the external keyboard equipment type of the external equipment is a numeric keyboard type, wherein the numeric keyboard type allows a smart terminal to pop up a soft keyboard of an input method during input.

In one embodiment, the acquiring module includes:
a second acquiring sub-module configured to acquire manufacture identification information of the external equipment; and
the determining module includes:
a first searching sub-module configured to search the external keyboard equipment type corresponding to the manufacture identification information of the external equipment acquired by the second acquiring sub-module in a preset corresponding relationship between the manufacture identification information and the external keyboard equipment type;
a third determining sub-module configured to, when the external keyboard equipment type searched out by the first searching sub-module is a numeric keyboard type, determine that the external keyboard equipment type of the external equipment is a numeric keyboard type; and
a fourth determining sub-module configured to, when the external keyboard equipment type searched out by the first searching sub-module is a qwerty keyboard type, determine that the external keyboard equipment type of the external equipment is a qwerty keyboard type.

In one embodiment, the acquiring module comprise includes:
a third acquiring sub-module configured to acquire an on-off state of external keyboard equipment type identification of the external equipment, wherein the external keyboard equipment type identification is used for identifying the external keyboard equipment type with the on-off state; and
the determining module includes:
a second searching sub-module configured to search the external keyboard equipment type corresponding to the an on-off state of the external keyboard equipment type identification of the external equipment acquired by the third acquiring sub-module in a preset corresponding relationship between the on-off state of the external keyboard equipment type identification and the external keyboard equipment type;
a fifth determining sub-module configured to, when the external keyboard equipment type searched out by the second searching sub-module is a numeric keyboard type, determine that the external keyboard equipment type of the external equipment is a numeric keyboard type; and
a sixth determining sub-module configured to, when the external keyboard equipment type searched out by the second searching sub-module is a qwerty keyboard type, determine that the external keyboard equipment type of the external equipment is a qwerty keyboard type.

In one embodiment, the connecting module includes:
a connecting sub-module configured to accomplish the equipment statement of the external equipment and accomplish wireless connection with the external equipment according to the external keyboard equipment type.

In one embodiment, the device further includes:
a type judging module configured to judge the external keyboard equipment type of the external equipment when an input operation is needed;
a first processing module configured to, when the type judging module judges that the external keyboard equipment type of the external equipment is a numeric keyboard type, pop up a soft keyboard of an input method and perform the input operation with the soft keyboard of the input method; and
a second processing module configured to, when the type judging module judges that the external keyboard equipment type of the external equipment is a qwerty keyboard type, perform the input operation with a keyboard of the external equipment.

According to a fourth aspect of embodiments of the present disclosure, there is provided a device for connecting external equipment, including:
a reporting module configured to, when it is monitored that a smart terminal is connected, report description information; and
a connecting module configured to accomplish connection with the smart terminal according to the description information reported by the reporting module.

In one embodiment, the device further includes:
a setting module configured to, before the connecting module is connected with the smart terminal, set the description information according to a keyboard use way of the external equipment.

In one embodiment, the setting module includes:
a first setting sub-module configured to set keyboard service finding protocol recording information according to the keyboard use way of the external equipment, wherein the keyboard service finding protocol recording information is used for stating a key supported by the external equipment;
wherein when the external keyboard equipment type of the external equipment is a qwerty keyboard type, the keyboard service finding protocol recording information states that the external equipment supports a preset letter key; and when the external keyboard equipment type of the external equipment is a numeric keyboard type, the keyboard service finding protocol recording information states that the external equipment does not support the preset letter key.

In one embodiment, the setting module includes:
a creating sub-module configured to create a corresponding relationship between manufacture identification information of the external equipment and the external keyboard equipment type of the external equipment according to the keyboard use way of the external equipment;
wherein when the external keyboard equipment type of the external equipment is a qwerty keyboard type, a corresponding relationship between the manufacture identification information and the qwerty keyboard type is created; and when the external keyboard equipment type of the external equipment is a numeric keyboard type, a corresponding relationship between the manufacture identification information and the numeric keyboard type is created.

In one embodiment, the setting module includes:
a second setting sub-module configured to set an on-off state of external keyboard equipment type identification of the external equipment according to the keyboard use way of the external equipment;
wherein when the external keyboard equipment type of the external equipment is a qwerty keyboard type, the on-off state of the external keyboard equipment type identification of the external equipment is set as a first on-off state; and when the external keyboard equipment type of the external equipment is a numeric keyboard type, the on-off state of the external keyboard equipment type identification of the external equipment is set as a second on-off state.

In one embodiment, the device further includes:
a starting module configured to, when a keyboard use instruction of the smart terminal is received, start its own keyboard of the external equipment for the smart terminal to perform input operation.

According to a fifth aspect of embodiments of the present disclosure, there is provided a device for connecting external equipment, including:
a processor; and
a memory for storing instructions executable by the processor;
wherein the processor is configured to perform:
when it is monitored that the external equipment is connected, acquiring description information of the external equipment;
determining an external keyboard equipment type of the external equipment according to the description information of the external equipment; and
accomplishing an equipment statement of and a connection to the external equipment according to the external keyboard equipment type.

According to a sixth aspect of embodiments of the present disclosure, there is provided a device for connecting external equipment, including:
a processor; and
a memory for storing instructions executable by the processor;
wherein the processor is configured to perform:
when it is monitored that a smart terminal is connected, reporting description information; and
accomplishing connection with the smart terminal according to the description information.

The technical scheme according to embodiments of the present disclosure may have the following beneficial effects.

In the above technical solution, when the equipment such as a terminal connects with the external equipment, it acquires the description information of the external equipment, and determines an external keyboard equipment type of the external equipment according to the description information of the external equipment, that is, determines whether the external equipment is of a qwerty keyboard type or a numeric keyboard type, then accomplishes an equipment statement of and a connection to the external equipment according to the external keyboard equipment type. In this way, when the equipment such as a smart terminal connects with the external equipment, if a user needs to perform input operation, it may be determined whether to perform the input operation with a soft keyboard of an input method or perform the input operation through the external equipment according to the external keyboard equipment type, thus ensuring that the user may normally perform the input operation and improving the user experience.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for connecting external equipment according to an exemplary embodiment.
Fig. 2 is a flow chart illustrating a method for connecting external equipment according to another exemplary embodiment.
Fig. 3 is a flow chart illustrating a method for connecting external equipment according to a further exemplary embodiment.
Fig. 4 is a flow chart illustrating a method for connecting external equipment according to a yet further exemplary embodiment.
Fig. 5 is a flow chart illustrating a method for connecting external equipment according to a yet further exemplary embodiment.
Fig. 6 is a flow chart illustrating a method for connecting external equipment according to a yet further exemplary embodiment.
Fig. 7 is a flow chart illustrating a method for connecting external equipment according to an exemplary embodiment.
Fig. 8 is a flow chart illustrating a method for connecting external equipment according to another exemplary embodiment.
Fig. 9 is a flow chart illustrating a method for connecting external equipment according to a further exemplary embodiment.
Fig. 10 is a flow chart illustrating a method for connecting external equipment according to a yet further exemplary embodiment.
Fig. 11 is a flow chart illustrating a method for connecting external equipment according to a yet further exemplary embodiment.
Fig. 12 is a flow chart illustrating a method for connecting external equipment according to a yet further exemplary embodiment.
Fig. 13 is a block diagram of a device for connecting external equipment according to an exemplary embodiment.
Fig. 14 is a block diagram of an acquiring module in a device for connecting external equipment according to an exemplary embodiment.
Fig. 15 is a block diagram of a determining module in a device for connecting external equipment according to an exemplary embodiment.
Fig. 16 is a block diagram of an acquiring module in a device for connecting external equipment according to another exemplary embodiment.
Fig. 17 is a block diagram of a determining module in a device for connecting external equipment according to another exemplary embodiment.
Fig. 18 is a block diagram of an acquiring module in a device for connecting external equipment according to a yet further exemplary embodiment.
Fig. 19 is a block diagram of a determining module in a device for connecting external equipment according to a yet further exemplary embodiment.
Fig. 20 is a block diagram of a first connecting module in a device for connecting external equipment according to an exemplary embodiment.
Fig. 21 is a block diagram of a device for connecting external equipment according to another exemplary embodiment.
Fig. 22 is a block diagram of a device for connecting external equipment according to an exemplary embodiment.
Fig. 23 is a block diagram of a device for connecting external equipment according to another exemplary embodiment.
Fig. 24 is a block diagram of a setting module in a device for connecting external equipment according to an exemplary embodiment.
Fig. 25 is a block diagram of a setting module in a device for connecting external equipment according to another exemplary embodiment.
Fig. 26 is a block diagram of a setting module in a device for connecting external equipment according to a yet further exemplary embodiment.
Fig. 27 is a block diagram of a device for connecting external equipment according to a yet further exemplary embodiment.
Fig. 28 is a block diagram of a device for connecting external equipment according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

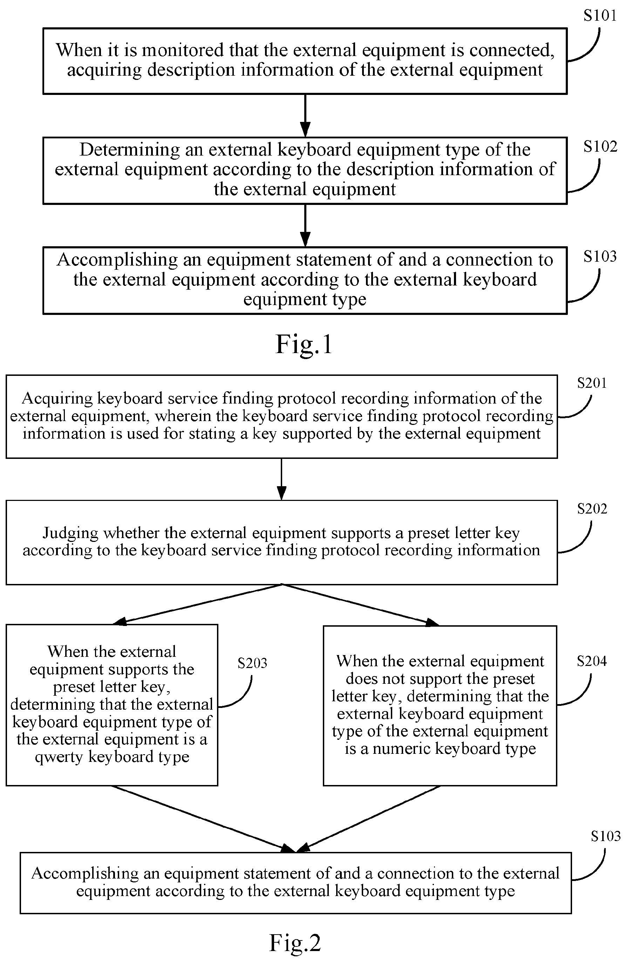

The embodiments of the present disclosure provide a method for connecting external equipment, which may be applied in terminal equipment that needs to connect with the external equipment. As shown in Fig. 1, the method includes steps S101-S103.

In step 101, when it is monitored that the external equipment is connected, description information of the external equipment is acquired; and in one embodiment, the description information of the external equipment is set according to a keyboard use way of the external equipment.

In step 102, an external keyboard equipment type of the external equipment is determined according to the description information of the external equipment.

In step 103, an equipment statement of and a connection to the external equipment is accomplished or made according to the external keyboard equipment type.

In the present embodiment, when the equipment such as a smart terminal connects with the external equipment, it acquires the description information of the external equipment, and determines an external keyboard equipment type of the external equipment according to the description information of the external equipment, that is, determines whether the external equipment is of a qwerty keyboard type or a numeric keyboard type, then accomplishes an equipment statement of and a connection to the external equipment according to the external keyboard equipment type. In this way, when the equipment such as a smart terminal connects with the external equipment, if a user needs to perform input operation on the smart terminal, it may be determined whether to perform the input operation with a soft keyboard of an input method or perform the input operation through the external equipment according to the external keyboard equipment type, thus ensuring that the user may normally perform the input operation and improving the user experience.

As shown in Fig. 2, in one embodiment, the acquiring description information of the external equipment in the above step S101 includes step S201.

In step 201, keyboard service finding protocol recording information of the external equipment is acquired, wherein the keyboard service finding protocol recording information is used for stating a key supported by the external equipment.

The above step S102 includes steps S202-S204.

In step 202, it is judged whether the external equipment supports a preset letter key according to the keyboard service finding protocol recording information, wherein the preset letter key may be a certain letter key on the keyboard, for example, Q key.

In step 203, when the external equipment supports the preset letter key, it is determined that the external keyboard equipment type of the external equipment is a qwerty keyboard type, wherein the qwerty keyboard type does not allow a smart terminal to pop up a soft keyboard of an input method during input.

In step 204, when the external equipment does not support the preset letter key, it is determined that the external keyboard equipment type of the external equipment is a numeric keyboard type, wherein the numeric keyboard type allows a smart terminal to pop up a soft keyboard of an input method during input.

In the present embodiment, the external keyboard equipment type is determined by judging whether the external equipment supports the preset letter key, and it is determined whether to perform the input operation with a soft keyboard of an input method or perform the input operation through the external equipment according to the external keyboard equipment type, thus ensuring that the user may normally perform the input operation and improving the user experience.

For example, the external equipment is a Bluetooth selfie stick, which is judged that it does not support the preset letter key according to its service finding protocol recording information. The preset letter key includes, but is not limited to, Q key. For example, the Bluetooth selfie stick does not support Q key, then is may be determined that the external keyboard equipment type of the Bluetooth selfie stick is a numeric keyboard type. Therefore, when an input needs to be performed, the soft keyboard of the input method is allowed to be popped up, thus ensuring that the user may normally perform input operation when using the Bluetooth selfie stick.

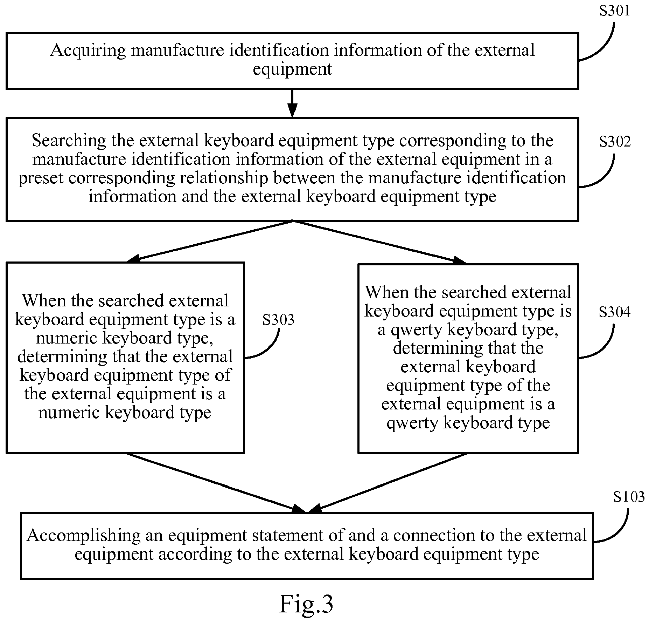

As shown in Fig. 3, in one embodiment, the acquiring description information of the external equipment in the above step S101 includes step S301.

In step 301, manufacture identification information of the external equipment is acquired.

The above step S102 includes steps S302-S304.

In step 302, the external keyboard equipment type corresponding to the manufacture identification information of the external equipment is searched in a preset corresponding relationship between the manufacture identification information and the external keyboard equipment type.

In step 303, when the searched external keyboard equipment type is a numeric keyboard type, it is determined that the external keyboard equipment type of the external equipment is a numeric keyboard type, wherein the numeric keyboard type allows a smart terminal to pop up a soft keyboard of an input method during input.

In step 304, when the searched external keyboard equipment type is a qwerty keyboard type, it is determined that the external keyboard equipment type of the external equipment is a qwerty keyboard type, wherein the qwerty keyboard type does not allow a smart terminal to pop up a soft keyboard of an input method during input.

Wherein for different external equipment, the manufacture identification information may be different. For example, the manufacture identification information of the Bluetooth selfie stick and the external keyboard may be different. Therefore, different manufacture identification information and corresponding external keyboard equipment type may be preset. For example, the manufacture identification information of the Bluetooth selfie stick corresponds to the numeric keyboard type, and the manufacture identification information of the external keyboard corresponds to the qwerty keyboard type, and then when the external equipment needs to be connected, its manufacture identification information is acquired, and the external keyboard equipment type which it belongs to is determined according to the manufacture identification information.

In the present embodiment, the external keyboard equipment type is judged according to the preset manufacture identification information of the external equipment, and it is determined whether to perform the input operation with a soft keyboard of an input method or perform the input operation through the external equipment according to the external keyboard equipment type, thus ensuring that the user may normally perform the input operation and improving the user experience.

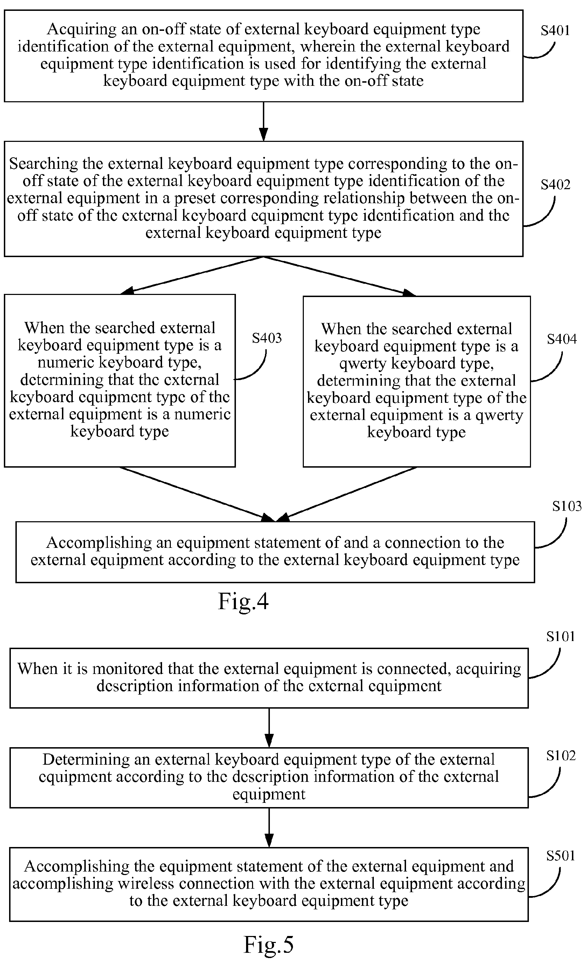

As shown in Fig. 4, in one embodiment, the acquiring description information of the external equipment in the above step S101 includes step S401.

In step 401, an on-off state of external keyboard equipment type identification of the external equipment is acquired, wherein the external keyboard equipment type identification is used for identifying the external keyboard equipment type with the on-off state.

The above step S102 includes steps S402-S404.

In step 402, the external keyboard equipment type corresponding to the on-off state of the external keyboard equipment type identification of the external equipment is searched in a preset corresponding relationship between the on-off state of the external keyboard equipment type identification and the external keyboard equipment type.

In step 403, when the searched external keyboard equipment type is a numeric keyboard type, it is determined that the external keyboard equipment type of the external equipment is a numeric keyboard type.

In step 404, when the searched external keyboard equipment type is a qwerty keyboard type, it is determined that the external keyboard equipment type of the external equipment is a qwerty keyboard type.

In the present embodiment, the external keyboard equipment type may be further determined according to the on-off state of external keyboard equipment type identification of the external equipment, wherein the on-off state of external keyboard equipment type identification may include an on state and an off state. It may be preset that the corresponding external keyboard equipment type is the qwerty keyboard type when the on-off state of external keyboard equipment type identification is in the on state, and the corresponding external keyboard equipment type is the numeric keyboard type when the on-off state of external keyboard equipment type identification is in the off state.

In this way, the external keyboard equipment type is determined according to the on-off state of external keyboard equipment type identification of the external equipment, and it is determined whether to perform the input operation with a soft keyboard of an input method or perform the input operation through the external equipment according to the external keyboard equipment type, thus ensuring that the user may normally perform the input operation and improving the user experience.

As shown in Fig. 5, in one embodiment, the above step S103 includes step S501.

In step S501, the equipment statement of the external equipment is accomplished and wireless connection with the external equipment is accomplished, according to the external keyboard equipment type.

In the present embodiment, the external equipment may be wireless external equipment. Therefore, the equipment such as a terminal may accomplish the wireless connection with the external equipment and the equipment statement of the external equipment according to the external keyboard equipment type of the external equipment, thus ensuring normal use of the external equipment and ensuring normal use of the soft keyboard of the input method at the same time.

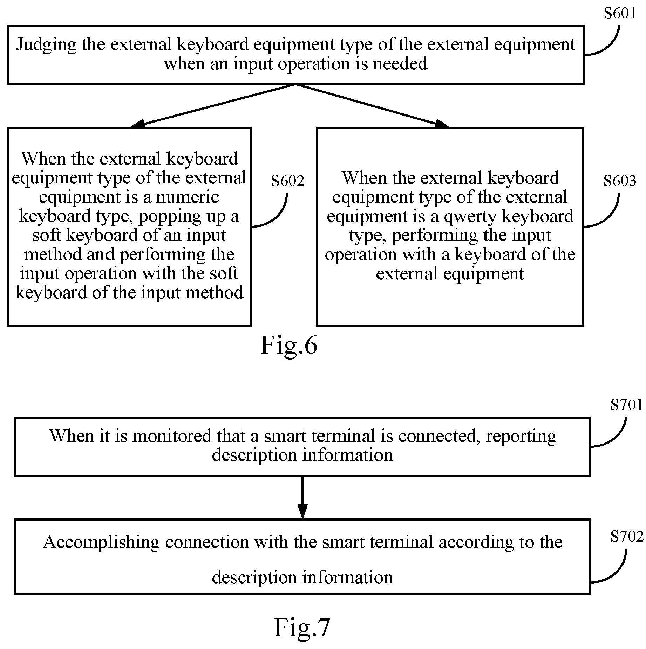

As shown in Fig. 6, in one embodiment, the above method further includes steps S601-S603.

In step 601, the external keyboard equipment type of the external equipment is judged when an input operation is needed.

In step 602, when the external keyboard equipment type of the external equipment is a numeric keyboard type, a soft keyboard of the input method is popped up and the input operation is performed with the soft keyboard of the input method.

In step 603, when the external keyboard equipment type of the external equipment is a qwerty keyboard type, the input operation is performed with a keyboard of the external equipment.

In the present embodiment, when the input operation is needed, how to perform input operation may be determined according to the external keyboard equipment type of the external equipment. When the external keyboard equipment type of the external equipment is a numeric keyboard type, a soft keyboard of the input method is popped up and the input operation is performed with the soft keyboard of the input method. When the external keyboard equipment type of the external equipment is a qwerty keyboard type, the input operation is performed with a keyboard of the external equipment. In this way, it may be ensured that the input operation is normally performed no matter the external equipment is of which type.

The embodiments of the present disclosure further provide a method for connecting external equipment, which may be applied in the external equipment (for example, the external keyboard, the wireless selfie stick, or the like). As shown in Fig. 7, the method includes steps S701-S702.

In step 701, when it is monitored that a smart terminal is connected, description information is reported.

In step 702, connection with the smart terminal is accomplished according to the description information.

In the present embodiment, the external equipment may report the description information to the smart terminal, and then accomplish the connection with the smart terminal according to the description information.

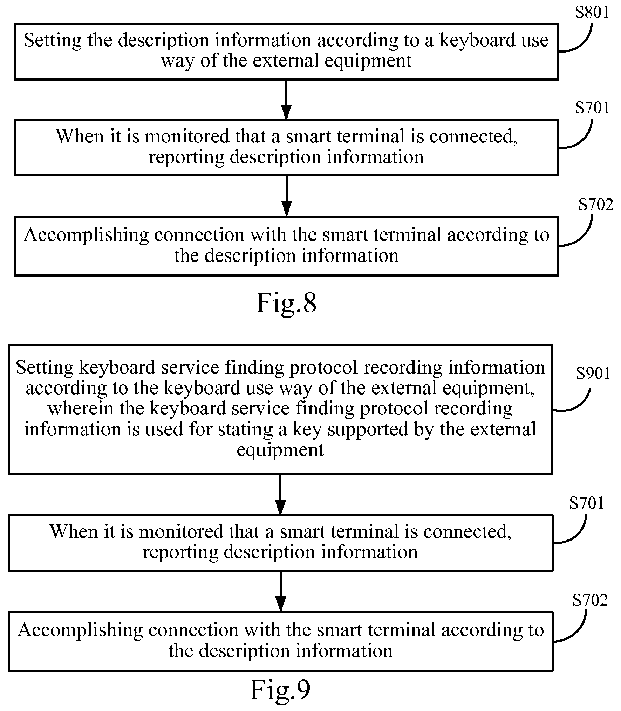

As shown in Fig. 8, in one embodiment, the above method further includes step S801.

In step 801, before the connection with the smart terminal, the description information is set according to a keyboard use way of the external equipment.

In the present embodiment, the description information is set according to a keyboard use way of the external equipment. In this way, it may avoid setting the description information of all the external equipment as the description information corresponding to the qwerty keyboard type by default, thus causing that the soft keyboard of the input method cannot be used when the external equipment is used. In this way, it may be ensured that the user may normally perform the input operation no matter the external equipment is of which type.

As shown in Fig. 9, in one embodiment, the setting the description information according to a keyboard use way of the external equipment in the above step S801 includes step S901.

In step 901, keyboard service finding protocol recording information is set according to the keyboard use way of the external equipment, wherein the keyboard service finding protocol recording information is used for stating a key supported by the external equipment,

wherein when the external keyboard equipment type of the external equipment is a qwerty keyboard type, the keyboard service finding protocol recording information states that the external equipment supports a preset letter key; and when the external keyboard equipment type of the external equipment is a numeric keyboard type, the keyboard service finding protocol recording information states that the external equipment does not support the preset letter key.

In the present embodiment, keyboard service finding protocol recording information may be set according to the keyboard use way of the external equipment, wherein the keyboard service finding protocol recording information is used for stating a key supported by the external equipment. In this way, the external equipment may state that it supports those keys which it needs. For example, when the external equipment is the Bluetooth selfie stick, it does not need the qwerty keyboard input, then it may be determined that it is of the numeric keyboard type. At this time, the keyboard service finding protocol recording information may state which keys the Bluetooth selfie stick does not support, for example, it does not support the letter Q key. In this way, when the Bluetooth selfie stick connects with other equipment, for example, terminals, the external keyboard equipment type of the external equipment is determined according to the keyboard service finding protocol recording information. If the user needs the input operation, it may be judged whether input operation is allowed to use soft keyboard of the input method according to the external keyboard equipment type, thus ensuring normal use of the input method and improving the user experience.

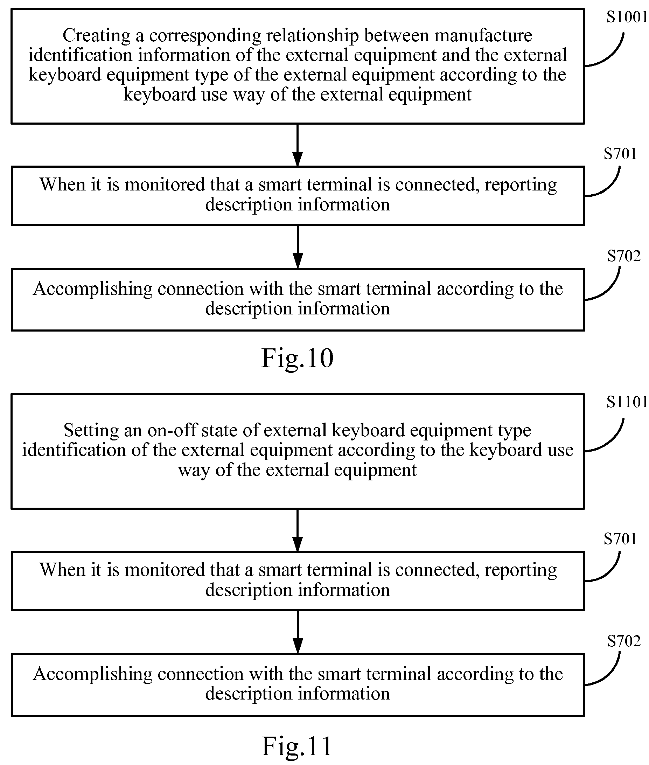

As shown in Fig. 10, in one embodiment, the setting the description information according to a keyboard use way of the external equipment in the above step S801 includes step S1001.

In step 1001, a corresponding relationship between manufacture identification information of the external equipment and the external keyboard equipment type of the external equipment is created according to the keyboard use way of the external equipment.

Wherein when the external keyboard equipment type of the external equipment is a qwerty keyboard type, a corresponding relationship between the manufacture identification information and the qwerty keyboard type is created; and when the external keyboard equipment type of the external equipment is a numeric keyboard type, a corresponding relationship between the manufacture identification information and the numeric keyboard type is created.

In the present embodiment, for different external equipment, the manufacture identification information may be different. For example, the manufacture identification information of the Bluetooth selfie stick and the external keyboard may be different. Therefore, different manufacture identification information and corresponding external keyboard equipment type may be preset. For example, the manufacture identification information of the Bluetooth selfie stick corresponds to the numeric keyboard type, and the manufacture identification information of the external keyboard corresponds to the qwerty keyboard type, and then when the external equipment needs to be connected, its manufacture identification information is acquired, and the external keyboard equipment type which it belongs to is determined according to the manufacture identification information.

As shown in Fig. 11, in one embodiment, the setting the description information according to a keyboard use way of the external equipment in the above step S801 includes step S1101.

In step 1101, an on-off state of external keyboard equipment type identification of the external equipment is set according to the keyboard use way of the external equipment.

Wherein when the external keyboard equipment type of the external equipment is a qwerty keyboard type, the on-off state of the external keyboard equipment type identification of the external equipment is set as a first on-off state; and when the external keyboard equipment type of the external equipment is a numeric keyboard type, the on-off state of the external keyboard equipment type identification of the external equipment is set as a second on-off state.

In the present embodiment, the on-off state of the external keyboard equipment type identification of the external equipment may include the first on-off state and the second on-off state (for example, the on state and the off state), it may be preset that the corresponding external keyboard equipment type is the qwerty keyboard type when the on-off state of external keyboard equipment type identification is the first on-off state, and the corresponding external keyboard equipment type is the numeric keyboard type when the on-off state of external keyboard equipment type identification is the second on-off state.

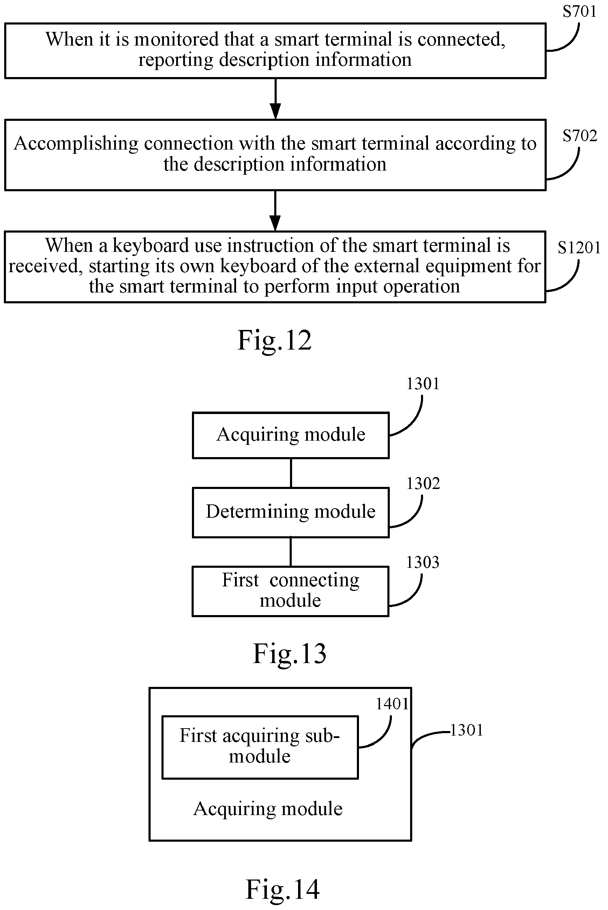

As shown in Fig. 12, in one embodiment, the method further includes step S1201.

In step 1201, when a keyboard use instruction of the smart terminal is received, its own keyboard of the external equipment is started for the smart terminal to perform input operation.

In the present embodiment, when the external equipment receives a keyboard use instruction of the smart terminal, its own keyboard is started for the smart terminal to perform input operation. However, when the external equipment does not receive a keyboard use instruction of the smart terminal, the smart terminal may perform input operation using the soft keyboard of the input method. In this way, it may be ensured that the input operation is normally performed no matter the external equipment is of which type.

In the following embodiments of devices according to the present disclosure, the devices may be configured to perform the method in the above embodiments of the present disclosure.

Fig. 13 is a block diagram illustrating a device for connecting external equipment according to an exemplary embodiment. The device may constitute a part or all of the terminal equipment by software, hardware or a combination thereof. As shown in Fig. 13, the device for connecting external equipment includes:
an acquiring module 1301 configured to, when it is monitored that the external equipment is connected, acquire description information of the external equipment;
a determining module 1302 configured to determine an external keyboard equipment type of the external equipment according to the description information of the external equipment acquired by the acquiring module 1301; and
a first connecting module 1303 configured to accomplish an equipment statement of and a connection to the external equipment according to the external keyboard equipment type determined by the determining module 1302.

In one embodiment, the description information of the external equipment is set according to a keyboard use way of the external equipment.

As shown in Fig. 14, in one embodiment, the acquiring module 1301 includes:
a first acquiring sub-module 1401 configured to acquire keyboard service finding protocol recording information of the external equipment, wherein the keyboard service finding protocol recording information is used for stating a key supported by the external equipment.

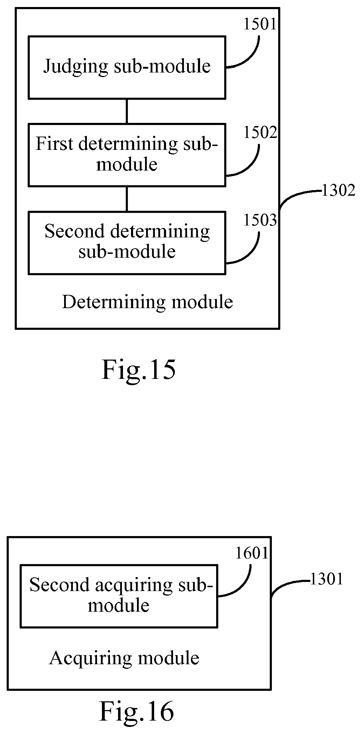

As shown in Fig. 15, the determining module 1302 includes:
a judging sub-module 1501 configured to judge whether the external equipment supports a preset letter key according to the keyboard service finding protocol recording information acquired by the first acquiring sub-module 1401;
a first determining sub-module 1502 configured to, when the judging sub-module 1501 judges that the external equipment supports the preset letter key, determine that the external keyboard equipment type of the external equipment is a qwerty keyboard type; and
a second determining sub-module 1503 configured to, when the judging sub-module 1501 judges that the external equipment does not support the preset letter key, determine that the external keyboard equipment type of the external equipment is a numeric keyboard type, wherein the numeric keyboard type allows a smart terminal to pop up a soft keyboard of an input method during input.

As shown in Fig. 16, in one embodiment, the acquiring module 1301 includes:
a second acquiring sub-module 1601 configured to acquire manufacture identification information of the external equipment.

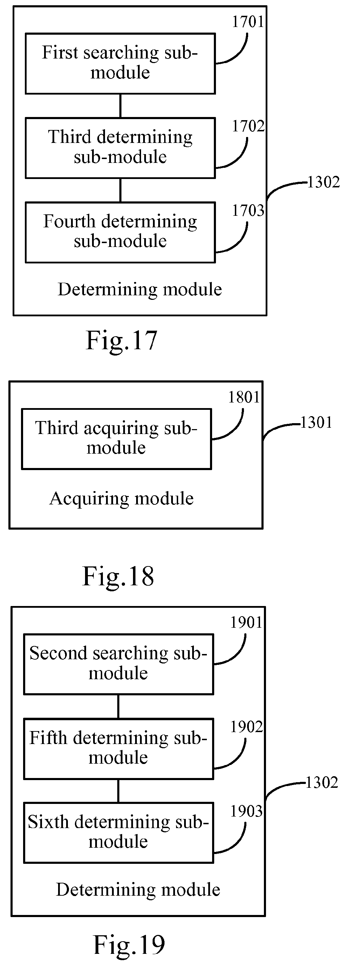

As shown in Fig. 17, in one embodiment, the determining module 1302 includes:
a first searching sub-module 1701 configured to search the external keyboard equipment type corresponding to the manufacture identification information of the external equipment acquired by the second acquiring sub-module in a preset corresponding relationship between the manufacture identification information and the external keyboard equipment type;
a third determining sub-module 1702 configured to, when the external keyboard equipment type searched out by the first searching sub-module 1701 is a numeric keyboard type, determine that the external keyboard equipment type of the external equipment is a numeric keyboard type; and
a fourth determining sub-module 1703 configured to, when the external keyboard equipment type searched out by the first searching sub-module is a qwerty keyboard type, determine that the external keyboard equipment type of the external equipment is a qwerty keyboard type.

As shown in Fig. 18, in one embodiment, the acquiring module 1301 includes:
a third acquiring sub-module 1801 configured to acquire an on-off state of external keyboard equipment type identification of the external equipment, wherein the external keyboard equipment type identification is used for identifying the external keyboard equipment type with the on-off state.

As shown in Fig. 19, in one embodiment, the determining module 1302 includes:
a second searching sub-module 1901 configured to search the external keyboard equipment type corresponding to the an on-off state of the external keyboard equipment type identification of the external equipment acquired by the third acquiring sub-module in a preset corresponding relationship between the on-off state of the external keyboard equipment type identification and the external keyboard equipment type;
a fifth determining sub-module 1902 configured to, when the external keyboard equipment type searched out by the second searching sub-module 1901 is a numeric keyboard type, determine that the external keyboard equipment type of the external equipment is a numeric keyboard type; and
a sixth determining sub-module 1903 configured to, when the external keyboard equipment type searched out by the second searching sub-module 1901 is a qwerty keyboard type, determine that the external keyboard equipment type of the external equipment is a qwerty keyboard type.

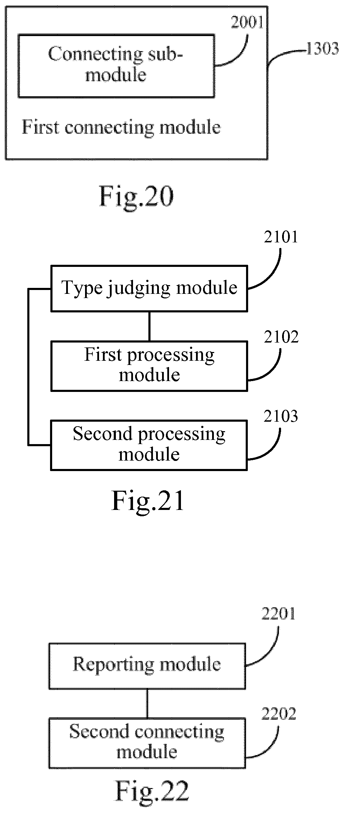

As shown in Fig. 20, in one embodiment, the first connecting module 1303 includes:
a connecting sub-module 2001 configured to accomplish the equipment statement of the external equipment and accomplish wireless connection with the external equipment according to the external keyboard equipment type.

As shown in Fig. 21, in one embodiment, the device further includes:
a type judging module 2101 configured to judge the external keyboard equipment type of the external equipment when an input operation is needed;
a first processing module 2102 configured to, when the type judging module 2101 judges that the external keyboard equipment type of the external equipment is a numeric keyboard type, pop up a soft keyboard of an input method and perform the input operation with the soft keyboard of the input method; and
a second processing module 2103 configured to, when the type judging module 2101 judges that the external keyboard equipment type of the external equipment is a qwerty keyboard type, perform the input operation with a keyboard of the external equipment.

Fig. 22 is a block diagram illustrating a device for connecting external equipment according to an exemplary embodiment. The device may constitute a part or all of the external equipment by software, hardware or a combination thereof. As shown in Fig. 22, the device for connecting external equipment includes:
a reporting module 2201 configured to, when it is monitored that a smart terminal is connected, report description information; and
a second connecting module 2202 configured to accomplish connection with the smart terminal according to the description information reported by the reporting module.

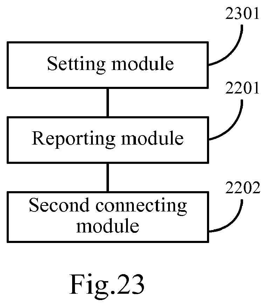

As shown in Fig. 23, in one embodiment, the device further includes:
a setting module 2301 configured to, before the connecting module is connected with the smart terminal, set the description information according to a keyboard use way of the external equipment.

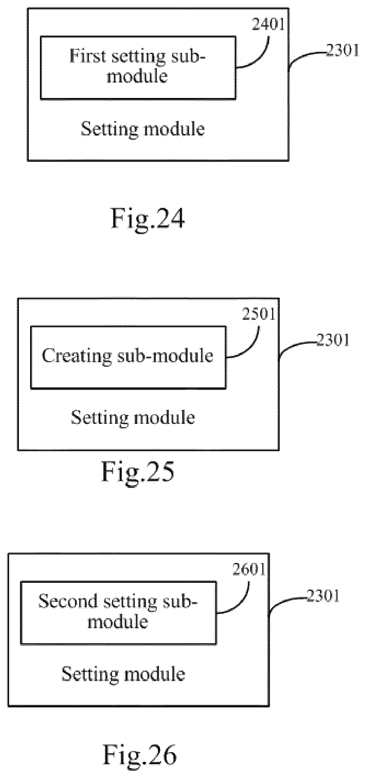

As shown in Fig. 24, in one embodiment, the setting module 2301 includes:
a first setting sub-module 2401 configured to set keyboard service finding protocol recording information according to the keyboard use way of the external equipment, wherein the keyboard service finding protocol recording information is used for stating a key supported by the external equipment;
wherein when the external keyboard equipment type of the external equipment is a qwerty keyboard type, the keyboard service finding protocol recording information states that the external equipment supports a preset letter key; and when the external keyboard equipment type of the external equipment is a numeric keyboard type, the keyboard service finding protocol recording information states that the external equipment does not support the preset letter key.

As shown in Fig. 25, in one embodiment, the setting module 2301 includes:
a creating sub-module 2501 configured to create a corresponding relationship between manufacture identification information of the external equipment and the external keyboard equipment type of the external equipment according to the keyboard use way of the external equipment;
wherein when the external keyboard equipment type of the external equipment is a qwerty keyboard type, a corresponding relationship between the manufacture identification information and the qwerty keyboard type is created; and when the external keyboard equipment type of the external equipment is a numeric keyboard type, a corresponding relationship between the manufacture identification information and the numeric keyboard type is created.

As shown in Fig. 26, in one embodiment, the setting module 2301 includes:
a second setting sub-module 2601 configured to set an on-off state of external keyboard equipment type identification of the external equipment according to the keyboard use way of the external equipment;
wherein when the external keyboard equipment type of the external equipment is a qwerty keyboard type, the on-off state of the external keyboard equipment type identification of the external equipment is set as a first on-off state; and when the external keyboard equipment type of the external equipment is a numeric keyboard type, the on-off state of the external keyboard equipment type identification of the external equipment is set as a second on-off state.

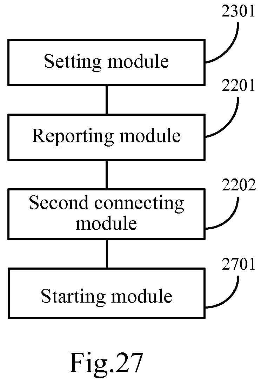

As shown in Fig. 27, in one embodiment, the device further includes:
a starting module 2701 configured to, when a keyboard use instruction of the smart terminal is received, start its own keyboard of the external equipment for the smart terminal to perform input operation.

According to a fifth aspect of embodiments of the present disclosure, there is provided a device for connecting external equipment, including:
a processor; and
a memory for storing instructions executable by the processor;
wherein the processor is configured to perform:
when it is monitored that the external equipment is connected, acquiring description information of the external equipment;
determining an external keyboard equipment type of the external equipment according to the description information of the external equipment; and
accomplishing an equipment statement of and a connection to the external equipment according to the external keyboard equipment type.

The above processor may be further configured to be that:
the description information of the external equipment is set according to a keyboard use way of the external equipment.

The above processor may be further configured to be that:
the acquiring description information of the external equipment includes:
acquiring keyboard service finding protocol recording information of the external equipment, wherein the keyboard service finding protocol recording information is used for stating a key supported by the external equipment; and
the determining an external keyboard equipment type of the external equipment according to the description information of the external equipment includes:
judging whether the external equipment supports a preset letter key according to the keyboard service finding protocol recording information;
when the external equipment supports the preset letter key, determining that the external keyboard equipment type of the external equipment is a qwerty keyboard type; and
when the external equipment does not support the preset letter key, determining that the external keyboard equipment type of the external equipment is a numeric keyboard type, wherein the numeric keyboard type allows a smart terminal to pop up a soft keyboard of an input method during input.

The above processor may be further configured to be that:
the acquiring description information of the external equipment includes:
acquiring manufacture identification information of the external equipment; and
the determining an external keyboard equipment type of the external equipment according to the description information of the external equipment includes:
searching the external keyboard equipment type corresponding to the manufacture identification information of the external equipment in a preset corresponding relationship between the manufacture identification information and the external keyboard equipment type;
when the searched external keyboard equipment type is a numeric keyboard type, determining that the external keyboard equipment type of the external equipment is a numeric keyboard type; and
when the searched external keyboard equipment type is a qwerty keyboard type, determining that the external keyboard equipment type of the external equipment is a qwerty keyboard type.

The above processor may be further configured to be that:
the acquiring description information of the external equipment includes:
acquiring an on-off state of external keyboard equipment type identification of the external equipment, wherein the external keyboard equipment type identification is used for identifying the external keyboard equipment type with the on-off state; and
the determining an external keyboard equipment type of the external equipment according to the description information of the external equipment includes:
searching the external keyboard equipment type corresponding to the on-off state of the external keyboard equipment type identification of the external equipment in a preset corresponding relationship between the on-off state of the external keyboard equipment type identification and the external keyboard equipment type;
when the searched external keyboard equipment type is a numeric keyboard type, determining that the external keyboard equipment type of the external equipment is a numeric keyboard type; and
when the searched external keyboard equipment type is a qwerty keyboard type, determining that the external keyboard equipment type of the external equipment is a qwerty keyboard type.

The above processor may be further configured to be that:
the accomplishing an equipment statement of and a connection to the external equipment according to the external keyboard equipment type includes:
accomplishing the equipment statement of the external equipment and accomplishing wireless connection with the external equipment according to the external keyboard equipment type.

The above processor may be further configured to:
judge the external keyboard equipment type of the external equipment when an input operation is needed;
when the external keyboard equipment type of the external equipment is a numeric keyboard type, pop up a soft keyboard of the input method and performing the input operation with the soft keyboard of the input method; and
when the external keyboard equipment type of the external equipment is a qwerty keyboard type, perform the input operation with a keyboard of the external equipment.

According to a sixth aspect of embodiments of the present disclosure, there is provided a device for connecting external equipment, including:
a processor; and
a memory for storing instructions executable by the processor;
wherein the processor is configured to perform:
when it is monitored that a smart terminal is connected, reporting description information; and
accomplishing connection with the smart terminal according to the description information.

The above processor may be further configured to:
before the connection with the smart terminal, set the description information according to a keyboard use way of the external equipment.

The above processor may be further configured to be that:
the setting the description information according to a keyboard use way of the external equipment includes:
setting keyboard service finding protocol recording information according to the keyboard use way of the external equipment, wherein the keyboard service finding protocol recording information is used for stating a key supported by the external equipment;
wherein when the external keyboard equipment type of the external equipment is a qwerty keyboard type, the keyboard service finding protocol recording information states that the external equipment supports a preset letter key; and when the external keyboard equipment type of the external equipment is a numeric keyboard type, the keyboard service finding protocol recording information states that the external equipment does not support the preset letter key.

The above processor may be further configured to be that:
the setting the description information according to a keyboard use way of the external equipment includes:
creating a corresponding relationship between manufacture identification information of the external equipment and the external keyboard equipment type of the external equipment according to the keyboard use way of the external equipment;
wherein when the external keyboard equipment type of the external equipment is a qwerty keyboard type, a corresponding relationship between the manufacture identification information and the qwerty keyboard type is created; and when the external keyboard equipment type of the external equipment is a numeric keyboard type, a corresponding relationship between the manufacture identification information and the numeric keyboard type is created.

The above processor may be further configured to be that:
the setting the description information according to a keyboard use way of the external equipment includes:
setting an on-off state of external keyboard equipment type identification of the external equipment according to the keyboard use way of the external equipment;
wherein when the external keyboard equipment type of the external equipment is a qwerty keyboard type, the on-off state of the external keyboard equipment type identification of the external equipment is set as a first on-off state; and when the external keyboard equipment type of the external equipment is a numeric keyboard type, the on-off state of the external keyboard equipment type identification of the external equipment is set as a second on-off state.

The above processor may be further configured to:
when a keyboard use instruction of the smart terminal is received, start its own keyboard of the external equipment for the smart terminal to perform input operation.

Implementation of the functions and operations of the modules in the above devices may be specifically referred to the implementation of the corresponding steps in the above methods, which may not be repeated herein.

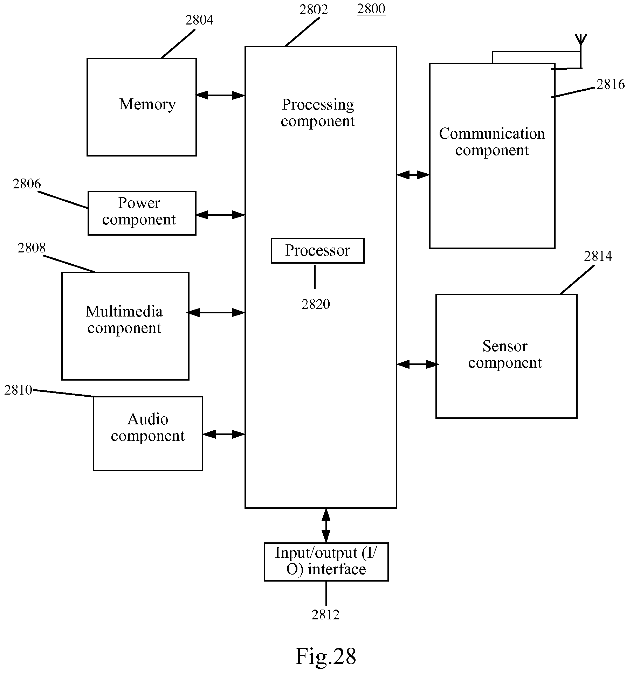

Fig. 28 is a block diagram of a device for connecting external equipment according to an exemplary embodiment. The device is suitable for the terminal equipment. For example, the device 2800 may be a mobile phone, a computer, a digital broadcast terminal, a messaging device, a gaming console, a tablet, a medical device, exercise equipment, a personal digital assistant, and the like.

The device 2800 may include one or more of the following components: a processing component 2802, a memory 2804, a power component 2806, a multimedia component 2808, an audio component 2810, an input/output (I/O) interface 2812, a sensor component 2814, and a communication component 2816.

The processing component 2802 typically controls overall operations of the device 2800, such as the operations associated with display, telephone calls, data communications, camera operations, and recording operations. The processing component 2802 may include one or more processors 2820 to execute instructions to perform all or part of the steps in the above described methods. Moreover, the processing component 2802 may include one or more modules which facilitate the interaction between the processing component 2802 and other components. For instance, the processing component 2802 may include a multimedia module to facilitate the interaction between the multimedia component 2808 and the processing component 2802.

The memory 2804 is configured to store various types of data to support the operation of the device 2800. Examples of such data include instructions for any applications or methods operated on the device 2800, contact data, phonebook data, messages, pictures, video, etc. The memory 2804 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 2806 provides power to various components of the device 2800. The power component 2806 may include a power management system, one or more power sources, and any other components associated with the generation, management, and distribution of power in the device 2800.

The multimedia component 2808 includes a screen providing an output interface between the device 2800 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 2808 includes a front camera and/or a rear camera. The front camera and the rear camera may receive an external multimedia datum while the device 2800 is in an operation mode, such as a photographing mode or a video mode. Each of the front camera and the rear camera may be a fixed optical lens system or have focus and optical zoom capability.

The audio component 2810 is configured to output and/or input audio signals. For example, the audio component 2810 includes a microphone ("MIC") configured to receive an external audio signal when the device 2800 is in an operation mode, such as a call mode, a recording mode, and a voice recognition mode. The received audio signal may be further stored in the memory 2804 or transmitted via the communication component 2816. In some embodiments, the audio component 2810 further includes a speaker to output audio signals.

The I/O interface 2812 provides an interface between the processing component 2802 and peripheral interface modules, such as a keyboard, a click wheel, buttons, and the like. The buttons may include, but are not limited to, a home button, a volume button, a starting button, and a locking button.

The sensor component 2814 includes one or more sensors to provide status assessments of various aspects of the device 2800. For instance, the sensor component 2814 may detect an open/closed status of the device 2800, relative positioning of components, e.g., the display and the keypad, of the device 2800, a change in position of the device 2800 or a component of the device 2800, a presence or absence of user contact with the device 2800, an orientation or an acceleration/deceleration of the device 2800, and a change in temperature of the device 2800. The sensor component 2814 may include a proximity sensor configured to detect the presence of nearby objects without any physical contact. The sensor component 2814 may further include a light sensor, such as a CMOS or CCD image sensor, for use in imaging applications. In some embodiments, the sensor component 2814 may further include an accelerometer sensor, a gyroscope sensor, a magnetic sensor, a pressure sensor or a temperature sensor.

The communication component 2816 is configured to facilitate communication, wired or wirelessly, between the device 2800 and other devices. The device 2800 may access a wireless network based on a communication standard, such as WiFi, 2G, or 3G, or a combination thereof. In one exemplary embodiment, the communication component 2816 receives a broadcast signal or broadcast associated information from an external broadcast management system via a broadcast channel. In one exemplary embodiment, the communication component 2816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 2800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is further provided a non-transitory computer-readable storage medium including instructions, such as included in the memory 2804, executable by the processor 2820 in the device 2800, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of a device 2800, the device 2800 is caused to perform the method for connecting external equipment. The method includes:
when it is monitored that the external equipment is connected, acquiring description information of the external equipment;
determining an external keyboard equipment type of the external equipment according to the description information of the external equipment; and
accomplishing an equipment statement of and a connection to the external equipment according to the external keyboard equipment type.

In one embodiment, the description information of the external equipment is set according to a keyboard use way of the external equipment.

In one embodiment, the acquiring description information of the external equipment includes:

acquiring keyboard service finding protocol recording information of the external equipment, wherein the keyboard service finding protocol recording information is used for stating a key supported by the external equipment; and
the determining an external keyboard equipment type of the external equipment according to the description information of the external equipment includes:
judging whether the external equipment supports a preset letter key according to the keyboard service finding protocol recording information;
when the external equipment supports the preset letter key, determining that the external keyboard equipment type of the external equipment is a qwerty keyboard type; and
when the external equipment does not support the preset letter key, determining that the external keyboard equipment type of the external equipment is a numeric keyboard type, wherein the numeric keyboard type allows a smart terminal to pop up a soft keyboard of an input method during input.

In one embodiment, wherein the acquiring description information of the external equipment includes:
acquiring manufacture identification information of the external equipment; and
the determining an external keyboard equipment type of the external equipment according to the description information of the external equipment includes:
searching the external keyboard equipment type corresponding to the manufacture identification information of the external equipment in a preset corresponding relationship between the manufacture identification information and the external keyboard equipment type;
when the searched external keyboard equipment type is a numeric keyboard type, determining that the external keyboard equipment type of the external equipment is a numeric keyboard type; and
when the searched external keyboard equipment type is a qwerty keyboard type, determining that the external keyboard equipment type of the external equipment is a qwerty keyboard type.

In one embodiment, wherein the acquiring description information of the external equipment includes:
acquiring an on-off state of external keyboard equipment type identification of the external equipment, wherein the external keyboard equipment type identification is used for identifying the external keyboard equipment type with the on-off state; and
the determining an external keyboard equipment type of the external equipment according to the description information of the external equipment includes:
searching the external keyboard equipment type corresponding to the on-off state of the external keyboard equipment type identification of the external equipment in a preset corresponding relationship between the on-off state of the external keyboard equipment type identification and the external keyboard equipment type;
when the searched external keyboard equipment type is a numeric keyboard type, determining that the external keyboard equipment type of the external equipment is a numeric keyboard type; and
when the searched external keyboard equipment type is a qwerty keyboard type, determining that the external keyboard equipment type of the external equipment is a qwerty keyboard type.

In one embodiment, the accomplishing an equipment statement of and a connection to the external equipment according to the external keyboard equipment type includes:
accomplishing the equipment statement of the external equipment and accomplishing wireless connection with the external equipment according to the external keyboard equipment type.

In one embodiment, the method further includes:
judging the external keyboard equipment type of the external equipment when an input operation is needed;
when the external keyboard equipment type of the external equipment is a numeric keyboard type, popping up a soft keyboard of an input method and performing the input operation with the soft keyboard of the input method; and
when the external keyboard equipment type of the external equipment is a qwerty keyboard type, performing the input operation with a keyboard of the external equipment.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for connecting external equipment, applied in a smart terminal, comprising:
when it is monitored that the external equipment is connected, acquiring (S101) description information of the external equipment;
determining (S102) an external keyboard equipment type of the external equipment according to the description information of the external equipment; and
accomplishing (S103) an equipment statement of and a connection to the external equipment according to the external keyboard equipment type.

2. The method of claim 1, wherein the description information of the external equipment is set according to a keyboard use way of the external equipment.

3. The method of claim 1 or claim 2, wherein the acquiring (S101) description information of the external equipment comprises:
acquiring (S201) keyboard service finding protocol recording information of the external equipment, wherein the keyboard service finding protocol recording information is used for stating a key supported by the external equipment; and
the determining (S102) an external keyboard equipment type of the external equipment according to the description information of the external equipment comprises:
judging (S202) whether the external equipment supports a preset letter key according to the keyboard service finding protocol recording information;
when the external equipment supports the preset letter key, determining (S203) that the external keyboard equipment type of the external equipment is a qwerty keyboard type; and
when the external equipment does not support the preset letter key, determining (S204) that the external keyboard equipment type of the external equipment is a numeric keyboard type, wherein the numeric keyboard type allows a smart terminal to pop up a soft keyboard of an input method during input.

4. The method of claim 1 or claim 2, wherein the acquiring (S101) description information of the external equipment comprises:
acquiring (S301) manufacture identification information of the external equipment; and
the determining (S102) an external keyboard equipment type of the external equipment according to the description information of the external equipment comprises:
searching (S302) the external keyboard equipment type corresponding to the manufacture identification information of the external equipment in a preset corresponding relationship between the manufacture identification information and the external keyboard equipment type;
when the searched external keyboard equipment type is a numeric keyboard type, determining (S303) that the external keyboard equipment type of the external equipment is a numeric keyboard type; and
when the searched external keyboard equipment type is a qwerty keyboard type, determining (S304) that the external keyboard equipment type of the external equipment is a qwerty keyboard type.

5. The method of claim 1 or claim 2, wherein the acquiring (S101) description information of the external equipment comprises:
acquiring (S401) an on-off state of external keyboard equipment type identification of the external equipment, wherein the external keyboard equipment type identification is used for identifying the external keyboard equipment type with the on-off state; and
the determining (S102) an external keyboard equipment type of the external equipment according to the description information of the external equipment comprises:
searching (S402) the external keyboard equipment type corresponding to the on-off state of the external keyboard equipment type identification of the external equipment in a preset corresponding relationship between the on-off state of the external keyboard equipment type identification and the external keyboard equipment type;
when the searched external keyboard equipment type is a numeric keyboard type, determining (S403) that the external keyboard equipment type of the external equipment is a numeric keyboard type; and
when the searched external keyboard equipment type is a qwerty keyboard type, determining (S404) that the external keyboard equipment type of the external equipment is a qwerty keyboard type.

6. The method of any preceding claim, wherein the accomplishing (S103) an equipment statement of and a connection to the external equipment according to the external keyboard equipment type comprises:
accomplishing (S501) the equipment statement of the external equipment and accomplishing wireless connection with the external equipment according to the external keyboard equipment type.

7. The method of any preceding claim, further comprising:
judging (S601) the external keyboard equipment type of the external equipment when an input operation is needed;
when the external keyboard equipment type of the external equipment is a numeric keyboard type, popping (S602) up a soft keyboard of an input method and performing the input operation with the soft keyboard of the input method; and
when the external keyboard equipment type of the external equipment is a qwerty keyboard type, performing (S603) the input operation with a keyboard of the external equipment.

8. A method for connecting external equipment, applied in an external equipment, comprising:
when it is monitored that a smart terminal is connected, reporting (S701) description information; and
accomplishing (S702) connection with the smart terminal according to the description information.

9. The method of claim 8, further comprising:
before the connection with the smart terminal, setting (S801) the description information according to a keyboard use way of the external equipment.

10. The method of claim 9, wherein the setting (S801) the description information according to a keyboard use way of the external equipment comprises:
setting (S901) keyboard service finding protocol recording information according to the keyboard use way of the external equipment, wherein the keyboard service finding protocol recording information is used for stating a key supported by the external equipment,
wherein when the external keyboard equipment type of the external equipment is a qwerty keyboard type, the keyboard service finding protocol recording information states that the external equipment supports a preset letter key; and when the external keyboard equipment type of the external equipment is a numeric keyboard type, the keyboard service finding protocol recording information states that the external equipment does not support the preset letter key.

11. The method of claim 9, wherein the setting (S801) the description information according to a keyboard use way of the external equipment comprises:
creating (S1001) a corresponding relationship between manufacture identification information of the external equipment and the external keyboard equipment type of the external equipment according to the keyboard use way of the external equipment,
wherein when the external keyboard equipment type of the external equipment is a qwerty keyboard type, a corresponding relationship between the manufacture identification information and the qwerty keyboard type is created; and when the external keyboard equipment type of the external equipment is a numeric keyboard type, a corresponding relationship between the manufacture identification information and the numeric keyboard type is created.

12. The method of claim 9, wherein the setting (S801) the description information according to a keyboard use way of the external equipment comprises:
setting (S1101) an on-off state of external keyboard equipment type identification of the external equipment according to the keyboard use way of the external equipment,
wherein when the external keyboard equipment type of the external equipment is a qwerty keyboard type, the on-off state of the external keyboard equipment type identification of the external equipment is set as a first on-off state; and when the external keyboard equipment type of the external equipment is a numeric keyboard type, the on-off state of the external keyboard equipment type identification of the external equipment is set as a second on-off state.

13. The method of any of claims 8 to 12, further comprising:
when a keyboard use instruction of the smart terminal is received, starting (S1201) its own keyboard of the external equipment for the smart terminal to perform input operation.

14. A device for connecting external equipment, comprising:
an acquiring module (1301) configured to, when it is monitored that the external equipment is connected, acquire description information of the external equipment;
a determining module (1302) configured to determine an external keyboard equipment type of the external equipment according to the description information of the external equipment acquired by the acquiring module; and
a connecting module (1303) configured to accomplish an equipment statement of and a connection to the external equipment according to the external keyboard equipment type determined by the determining module.

15. A device for connecting external equipment, comprising:
a reporting module (2201) configured to, when it is monitored that a smart terminal is connected, report description information; and
a connecting module (2202) configured to accomplish connection with the smart terminal according to the description information reported by the reporting module.
